Europäisches Patentamt

European Patent Office

Office européen des brevets

(11) Veröffentlichungsnummer: **0 303 860**
**A2**

## (12) EUROPÄISCHE PATENTANMELDUNG

(21) Anmeldenummer: 88112097.6

(22) Anmeldetag: 27.07.88

(51) Int. Cl.⁴: **F16K 17/19**

(30) Priorität: 21.08.87 DE 3727891

(43) Veröffentlichungstag der Anmeldung:
**22.02.89 Patentblatt 89/08**

(84) Benannte Vertragsstaaten:
**FR GB IT NL**

(71) Anmelder: **MESSER GRIESHEIM GMBH**
**Hanauer Landstrasse 330**
**D-6000 Frankfurt/Main 1(DE)**

(72) Erfinder: **Fieseler, Heinrich**
**Kantstrasse 2**
**D-4047 Dormagen 5(DE)**
Erfinder: **Henneborn, Roland**
**Berrenrather Strasse 234**
**D-5000 Köln 41(DE)**
Erfinder: **Holstein, Günter**
**Ahornweg 5**
**D-5000 Köln 40(DE)**

(54) Ventil zur Sicherung des Aussenbehälters von doppelwandigen vakuumisollerten Speicherbehältern für tiefsiedende verflüssigte Gase.

(57) Zur Sicherung des Außenbehälters (2) von doppelwandigen vakuumisolierten Speicherbehältern für tiefsiedende verflüssigte Gase gegen Druckanstieg im Isolationsraum bei Bruch des Vakuums dienen Ventile, die aus einem im Außenbehälter befestigten Ventilgehäuse (1), einem Dichtstopfen (3) und einem O-Ring (4) als Dichtelement bestehen. Der O-Ring wird ausschließlich in axialer Richtung verformt durch den Druckunterschied zwischen Atmosphäre und Vakuum und eine zusätzliche Federkraft. Für Kleinbehälter ist dieses Ventil wenig geeignet, u.a. wegen des durch die Feder bedingten verhältnismäßig großen Bauvolumens. Bei einem besonders für Kleinbehälter geeigneten Ventil wird daher der O-Ring infolge der Abmessungen von Ventilgehäuse und Dichtstopfen radial und gleichzeitig axial ausschließlich durch Einwirkung des äußeren Luftdruckes verformt.

FIG.1

## Ventil zur Sicherung des Außenbehälters von doppelwandigen vakuumisolierten Speicherbehältern für tiefsiedende verflüssigte Gase

Die Erfindung betrifft ein Ventil zur Sicherung des Außenbehälters von doppelwandigen vakuumisolierten Speicherbehältern für tiefsiedende verflüssigte Gase gegen Druckanstieg im Isolierraum bei Bruch des Vakuums nach dem Oberbegriff des Anspruches 1.

Der Bruch des Vakuums kann plötzlich erfolgen durch mechanische Einwirkung bei einem Unfall. Derartige Ereignisse sind äußerst selten und bleiben außer Betracht. Es ist vielmehr an die viel häufiger auftretenden Fälle gedacht, bei denen durch winzige Leckstellen ganz allmählich Luft in den evakuierten Isolationsraum eintritt und sich dort abkühlt. Der Verlust des Vakuums bringt eine höhere Wärmeeinströmung mit sich, so daß das gespeicherte verflüssigte Gas schnell verdampft.

Sobald das gesamte flüssige Gas verdampft ist, erwärmt sich der Behälter und die in den Isolationsraum eingeströmte Luft. Da die Luft durch das kleine Leck nicht schnell genug abströmen kann, entsteht ein Überdruck, der den Behälter beschädigt oder zerstört.

Um derartige Schadensfälle zu vermeiden hat man verhältnismäßig einfach aufgebaute Sicherheitsventile am Außenbehälter angebracht. Diese Ventile bestehen im wesentlichen aus einem zylindrischen Ventilgehäuse und einem ebenfalls zylindrischen Ventilstopfen. Die Abdichtung erfolgte durch radiales Verquetschen eines O-Ringes zwischen dem Ventilgehäuse und dem Ventilstopfen. Diese Ventile haben sich jedoch nicht bewährt. Zur Gewährleistung der Dichtheit ist nämlich ein bestimmter Anpreßdruck auf die Dichtflächen erforderlich. Der Ansprechdruck des Ventils ist größer als dieser Anpreßdruck er darf aber nicht zu hoch sein, da sonst die Funktion als Sicherheitsventil beeinträchtigt wird oder erlöscht. Der vorgegebene Ansprechdruck wird jedoch fast immer überschritten, weil durch die Quetschung des O-Ringes zu hohe Reibungskräfte an den Gleitflächen entstehen. Der Grund dafür sind Fertigungstoleranzen, unterschiedliche Oberflächengüte, Umwelteinflüsse und insbesondere der hohe Haftreibungsbeiwert. Es traten daher Schadensfällte auf, die auf dem Nichtfunktionieren dieses Ventils beruhten. Das Ventil öffnete hierbei entweder überhaupt nicht oder erst bei unzulässig hohem Druck.

Diese Schwierigkeiten treten vor allem bei der Absicherung von Kleinbehältern, Rohrleitungen und anderen kleinen Vakuumräumen auf. Bei Großbehältern, beispielsweise Standtanks, haben die Sicherheitsventile einen so großen Durchmesser, daß bereits der äußere Luftdruck einen ausreichenden Anpreßdruck für den Dichtkörper liefert.

Der Erfindung liegt daher die Aufgabe zugrunde, eine Außenbehälterabsicherung zu schaffen, die ein gleichbleibendes Ansprechverhalten bei Überdruck im Isolationsraum gewährleistet und insbesondere für Kleinbehälter geeignet ist.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen. Vorteilhafte Weiterbildungen der Erfindung sind in den Unteransprüchen angegeben.

Wesentliches Merkmal des erfindungsgemäßen Ventils ist daher, daß der O-Ring sowohl radial als auch axial verformt wird. Die Verformung in radialer Richtung wird dabei so gering gehalten, daß der geforderte Ansprechdruck mit Sicherheit gewährleistet ist. Andererseits reicht die Dichtkraft in radialer Richtung aus, um auf die Wirkung einer zusätzlichen Federkraft in axialer Richtung verzichten zu können. Die Verformung in axialer Richtung wird daher ausschließlich aufgebracht durch den Druckunterschied zwischen dem Vakuum im Isolationsraum und der umgebenden Luft.

Während der O-Ring bei den früher gebräuchlichen rein radialabdichtenden Ventilen bis an die Verformungsgrenze verquescht wurde, bleibt der radiale Verformungsgrad bei dem erfindungsgemäßen Ventil sehr klein. Entgegen den bekannten Einbauvorschriften, welche für statische Abdichtung ca. 20% und für dynamische Abdichtung ca. 10% Verformung vorsehen, liegt der Verformungsspielraum unter Berücksichtigung aller maximal zulässigen Toleranzen in den Grenzen von 5 bis 10%.

Beim Einsatzfall als Sicherheitsventil ergibt sich daher trotz möglicher Verarbeitungstoleranzen eine geringe Streuung des Ansprechbereichs. Er liegt niedriger als bei den für diesen Zweck ebenfalls verwendeten Berstscheiben. Die in einer Versuchsreihe gemessenen Ansprechdrücke lagen nach künstlicher Alterung bei ca. 0,3 bar mit einer Abweichung von ± 0,1 bar. Dieses Verhalten wird erreicht durch eine gezielte Ausnutzung der Elastizität des axial verpreßten O-Ringes. Die permanente axiale Kraftwirkung auf den O-Ring bedingt eine axiale und daraus resultierende elastische Verformung. Die erreichbaren Verformungsgrade in axialer Richtung liegen um 10% und sind bedingt durch die Abmessungen, die Druckverhältnisse und das Material des O-Ringes.

Tritt nach einem Vakuumbruch der Druckausgleich und darauf folgend eine Druckerhöhung im Isolationsraum ein, formt sich der O-Ring wieder auf seinen ursprünglichen Zustand zurück. Dabei vermindert sich die radiale Verpressung an die zylindrische Gleitfläche des Ventilgehäuses und somit die für eine hohe Haftreibung verantwortliche Normalkraft. Gleichzeitig wird die durch die axiale Verspannung übrig gebliebene Kraft frei, deren Wirkungsrichtung der der Druckkraft, welche durch steigenden Druck im Innenbehälter auf die Ventilfläche wirkt, gleich ist. Dabei vollzieht sich ein unverzüglicher Wechsel von Haft- auf Gleitreibung.

Die Zeichnungen veranschaulichen ein Ausführungsbeispiel der Erfindung im Schnitt.

Es zeigen:

Fig.1 ein erfindungsgemäßes Ventil, eingebaut in einem Außenbehälter, im Schnitt,

Fig.2 die Einzelheit A von Fig.1 vor Erzeugung des Vakuums,

Fig.3 die Einzelheit A von Fig.1 nach Erzeugung des Vakuums im Isolationsraum.

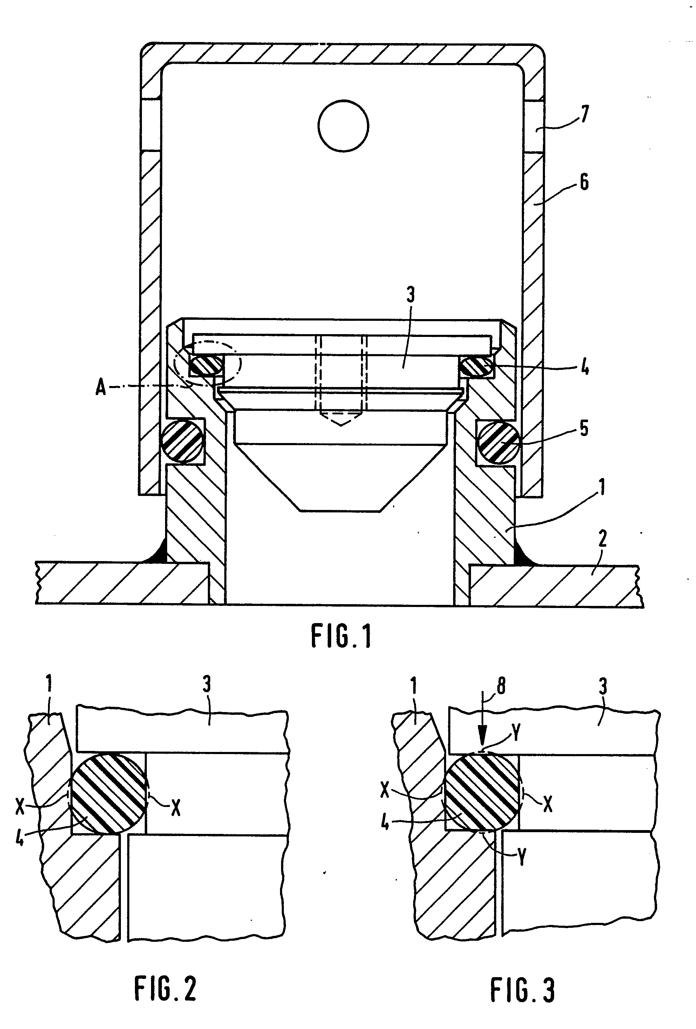

Das in Fig. 1 dargestellte Ventil besteht aus dem Ventilgehäuse 1, welches am Außenbehälter 2 angeschweißt ist. Im Ventilgehäuse 1 befindet sich der Ventilstopfen 3, dazwischen der durch Verformung als Dichtelement wirkende O-Ring 4. Auf das Ventilgehäuse 1 ist mittels eines weiteren O-Ringes 5 eine Ventilschutzkappe 6 mit Ausblasöffnungen 7 aufgesetzt. Diese Ventilschutzkappe 6 ist für die nachfolgend anhand der Figuren 2 und 3 beschriebenen Funktion des Ventils ohne Belang. Der Ventilstopfen 3 besitzt eine Gewindebohrung zum Anheben des Gewindestopfens bei angesetzter Vakuumschleuse.

Fig. 2 zeigt das Ventil im Zustand ausgeglichenen Druckes zwischen Isolationsraum und Außenatmosphäre. Dieser Zustand herrscht vor dem Evakuieren des Isolationsraumes und auch nach dem Evakuieren des Isolationsraumes, sofern die Vakuumschleuse an das Ventil angeschlossen ist. Hierbei tritt lediglich eine durch die Abmessungen von Ventilgehäuse 1 und Ventilstopfen 3 vorgegebene radiale Verformung an den Punkten X auf. Diese radiale Verformung in diesem Zustand liegt vorzugsweise im Bereich von 5 - 10%.

Fig.3 zeigt den Zustand des Ventils nach Entfernung der Abpumpschleuse, also im normalen Einsatz. Der Druckunterschied zwischen dem evakuierten Isolationsraum und der Außenatmosphäre verursacht eine durch den Pfeil 8 dargestellte Kraft in axialer Richtung auf den Ventilstopfen 3. Diese Kraft bewirkt eine zusätzliche Verformung des O-Ringes an den Punkten Y. Hierdurch wird aber auch die radiale Verformung an den Punkten X verstärkt. Die Kraft 8 bewirkt also eine bessere Abdichtung des gesamten Systems. Der Verformungsgrad in diesem stationären Zustand entspricht dem für eine statische Abdichtung.

Im Einsatzfall bei plötzlichem Druckanstieg im Isolationsraum formt sich der O-Ring 4 in axialer Richtung weitgehend zu seiner Ausgangsform zurück. Dadurch werden die an den Punkten X wirkenden Kräfte kleiner und die radiale Verformung nimmt ab. Analog dazu nimmt die für die Größe der Reibungskraft verantwortliche Normalkraft gegen die Gleitflächen des Ventils ab. Bei weiter steigendem Innendruck öffnet das Ventil nun bald, sobald der vorgegebene Ansprechdruck erreicht ist.

Sollte bis zum Druckausgleich die Rückverformung des O-Ringes 4 ausbleiben, also eine durch Alterung bedingte hohe Haftreibung weiterhin vorhanden sein, unterstützt der steigende Druck im Isolationsraum nun die gegen die Haftreibung wirkende Kraft des O-Ringes 4.

Es addieren sich die Vorspannkraft und die Druckkraft auf die Ventilquerschnittsfläche. Dadurch erfolgt dann in einem sehr begrenzten Druckbereich die Überwindung der Haftreibung verbunden mit einem spontanen Wechsel zur Gleitreibung und sofortigem Öffnen des Ventils.

**Ansprüche**

1. Ventil zur Sicherung des Außenbehälters (2) von doppelwandigen vakuumisolierten Speicherbehältern für tiefsiedende verflüssigte Gase gegen Druckanstieg im Isolationsraum bei Bruch des Vakuums, mit einem im Außenbehälter befestigten Ventilgehäuse (1), einem Ventilstopfen (3) und einem durch Verformung als Dichtelement zwischen Ventilgehäuse und Ventilstopfen wirkenden O-Ring (4), gekennzeichnet durch eine Verformung des O-Ringes in radialer Richtung infolge der Abmessungen von Ventilgehäuse und Dichtstopfen und eine gleichzeitige Verformung in axialer Richtung durch Einwirkung des äußeren Luftdruckes auf den Ventilstopfen.

2. Ventil nach Anspruch 1, gekennzeichnet durch eine Verformung des O-Ringes in radialer Richtung infolge der Abmessungen von Ventilgehäuse und Dichtstopfen zwischen 5% und 10%.

3. Ventil nach Anspruch 1 oder 2, gekennzeichnet durch eine Verformung des O-Ringes in axialer Richtung zwischen 8% und 12%.

FIG.1

FIG.2

FIG.3